# EUROPEAN PATENT SPECIFICATION

(11) **EP 3 902 741 B1**
(45) Date of publication and mention of the grant of the patent: **08.11.2023**
(21) Application number: 19839279.7
(22) Date of filing: 24.12.2019
(51) Int. Cl.: B62K 25/28, B62M 9/16

(54) **MOTORCYCLE WITH CHAIN DRIVE AND ADJUSTABLE BALANCE**
MOTORRAD MIT KETTENANTRIEB UND EINSTELLBARER BALANCE
MOTOCYCLETTE AVEC ENTRAÎNEMENT PAR CHAÎNE ET ÉQUILIBRE RÉGLABLE

(30) Priority: 28.12.2018 IT 201800021367
(43) Date of publication of application: 03.11.2021
(73) Proprietor: PIAGGIO & C. S.p.A., 56025 Pontedera, Pisa (IT)
(72) Inventor: RAFFAELLI, Andrea, 56025 Pontedera (IT)
(74) Representative: Savi, Massimiliano
(86) International application number: PCT/IB2019/061328
(87) International publication number: WO 2020/136578

(56) References cited:
- US-A- 4 237 744
- US-A- 4 789 042
- US-A1- 2014 367 942
- US-A1- 2015 367 907

## Description

The present invention falls within the scope of manufacturing motorcycles and motor vehicles. The present invention particularly relates to a motorcycle with a drive in which the balance of the vehicle is controlled by adjusting the catenary tension angle.

### BACKGROUND ART

In any motorcycle, there may be identified a front part, formed by the frame of the motorcycle and by the front wheel, and a rear part, or rear axle, comprising the rear wheel and a suspension which connects the same rear wheel to the frame. The frame supports a motor connected to the rear wheel by means of a mechanical drive, to transmit the motor torque thereto. In the most known configuration, this drive provides using a chain wound between a ring gear, which is integral with the axis of the rear wheel, and a pinion hinged to the frame and actuated by the motor. Typically, a taught branch and a non-taught branch are identified for the chain, where taught branch means the branch of the chain in upper position with respect to a horizontal reference plane.

The suspension typically comprises a swingarm hinged to the frame at one end and to the rear wheel at the opposite end. One end of a damper is typically hinged to the frame, the damper comprising a second end instead hinged to the frame.

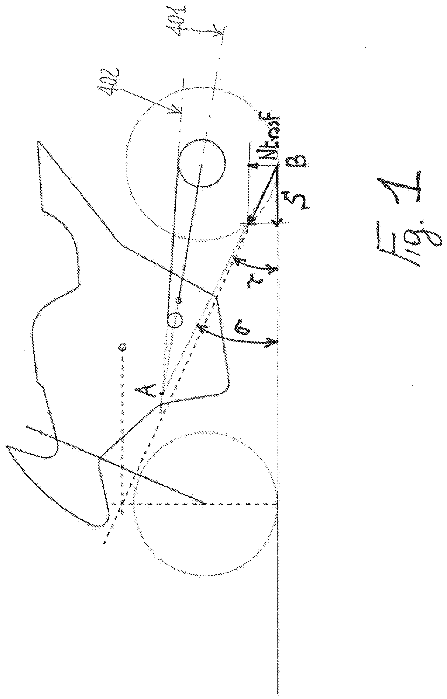

Figure 1 is a diagrammatic depiction indicating the forces which act on the wheel-swingarm system during the variations in speed of the motorcycle. In particular, the force parallel to ground S (directed forward if the vehicle is accelerating due to the thrust of the motor, or back if instead the vehicle is decelerating due to the rear brake) and the load transfer force Ntrasf are identified, the load transfer force being orthogonal to the thrust force S, which is added to the load with the vehicle traveling at null acceleration and is directed upwards with the vehicle accelerating and downwards with the vehicle slowing down. The result of the two forces S and Ntrasf is inclined with respect to a horizontal direction, by an angle τ typically indicated as load transfer angle. The catenary tension angle σ instead is defined as the angle between the horizontal direction and the straight line passing through the contact point of the rear wheel and through the point (indicated by A) intersecting the extension direction of the swingarm (401) with the direction (402) along which the taught branch of the chain extends. The expression "*extension direction of the swingarm*" is particularly identified with the direction intersecting the axes at which the swingarm is hinged to the frame and to the rear wheel, respectively.

The ratio of the tangents of the two angles τ, σ defined above is typically indicated by the name of catenary tension ratio and is indicated by letter R. As is known, the value of the catenary tension ratio affects the balance of the vehicle. Three cases may exist when considering a motorcycle which travels at a constant speed, for example. If the two angles are equal (R=1), the balance of the motorcycle remains substantially unvaried, since there are no momentums acting on the swingarm. If instead, the catenary tension angle τ is greater than the load transfer angle σ (R>1), then the rear suspension tends to become compressed, with subsequent lowering of the rear axle of the motorcycle. Contrarily, when the catenary tension ratio is less than 1 (R<1), then the rear suspension tends to extend, with subsequent raising of the rear axle of the motorcycle.

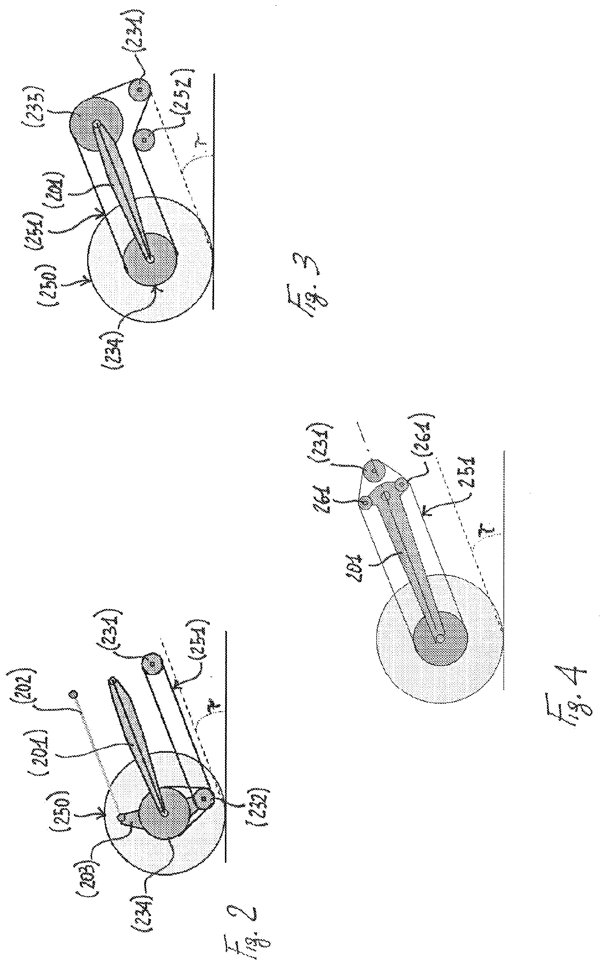

In order to reduce the variations in balance, and therefore in order to keep the catenary tension ratio equal to 1, or the closest possible to this value, various systems have been proposed, *inter alia* those commonly indicated by the names *Bilever, Tracklever* and *A.T.K.* Figures 2 to 4 are schematizations related to these systems. In particular, Figure 2 relates to a Bilever system in which there is an articulated parallelogram formed by the swingarm (201) and by a return arm (202) which is parallel to the swingarm (201) and which guides a connecting rod (203) according to a circular movement. This system provides a primary chain drive between a first pinion (231) hinged to the frame and a second pinion (232) hinged on a portion of the connecting rod (202). A secondary chain drive connects the second pinion to the ring (234) of the rear wheel (250). Given that there is a unitary ratio drive on the first stretch of chain (251) in this system, the result is that the taught branch thereof is always parallel to the swingarm for any position of the suspension and the swingarm (201) is mounted so as to be parallel to the direction of a predefined load transfer value. This system allows avoiding anomalous reactions in the event of sudden shifting, but it is apparently complex because it implies the presence of various non-suspended weights and operates exactly only for such a predetermined value.

Figure 3 relates to a Tracklever system in which in addition to the ring (234) on the rear wheel (250), there is a further ring (235) which is coaxial to the connection axis of the swingarm (201) to the frame. The lower stretch of the chain (251), which is actuated by the pinion (231), is guided by means of a free pinion (252) which allows compensating for the differences in length taken by the chain during the compression of the suspension due to the position of the pinion, which is very distant from the fulcrum of the swingarm on the frame, and forces the taught branch of the chain (with unitary ratio drive) to always remain parallel to the swingarm (201). Also in this case, the swingarm (201) is mounted so that the extension direction thereof is parallel to the load transfer direction for a single acceleration value. This system is also rather complicated from a constructional viewpoint, it also being less performing in the case of shifting.

With respect to the systems just described, the A.T.K. system schematized in Figure 4 perhaps is simpler, providing a swingarm (201) supporting two secondary pinions (261) serving the purpose of keeping the taught branch of the chain (251) parallel to the extension direction of the swingarm itself. In particular, the two secondary pinions (261) are positioned so that the force of reaction which the chain exerts thereon does not cause any additional momentum to the rotation of the swingarm.

From the above, it is apparent how the systems shown in Figures 2 to 4 provide to orientate the swingarm and the chain according to a direction which is parallel to a predetermined load transfer direction. Thus, these systems ensure a correct balance of the motorcycle only under given load conditions. As such conditions vary, the system no longer is balanced, and this affects the balance of the motorcycle. The other solution typically implemented to control the balance of the motorcycle is that of acting on the damper by means of an electronic control thereof. Although it is effective, this solution is known to be very expensive and certainly cannot be implemented on all motor vehicles.

With respect to these considerations, the need thus arises to provide a new solution which allows controlling the balance of the motorcycle also as the load conditions to which the same is subjected vary, without however acting on the structure of the damper, i.e. without resorting to using electronically-controlled dampers or systems having mechanical or hydraulic interconnection between the front and rear suspensions.

A motorcycle with the features of the preamble is shown in the document US 4,789,042 A.

### SUMMARY

With respect to the considerations above, it is the main task of the present invention to provide a motorcycle which allows the above-indicated limits to be overcome or at least reduced. Within the scope of this task, it is a first object of the present invention to provide a motorcycle in which the balance of the motorcycle is adjustable without using electronically-controlled dampers. It is a further object to provide a motorcycle in which it is possible to adjust the behavior of the rear suspension according to a forecast of the variation of the load transfer direction weighing on the wheel. It is a further object of the present invention to provide a motorcycle with chain drive which is reliable and easy to manufacture at competitive costs.

The present invention is based on the general consideration of overcoming the technical problem and of achieving the objects indicated above by providing a control of the balance of the motorcycle by adjusting the catenary tension ratio, and more accurately by adjusting the catenary tension angle. The task and the objects indicated above are particularly achieved by a motorcycle comprising:
- a frame supporting a motor;
- a rear wheel;
- a swingarm connecting the rear wheel to the frame, said swingarm being hinged to the frame by means of a first connection axis;
- a chain drive to transfer the torque generated by the motor to the rear wheel; in which said drive comprises a pinion hinged to the frame by means of a second connection axis.

In particular, the rear wheel is operatively connected to the frame (12) by means of a suspension configuring, with the frame, a quadrilateral kinematic mechanism. The quadrilateral kinematic mechanism comprises:
- the swingarm which extends between the first connection axis, at the frame and/or the motor, and a wheel axis at the rear wheel.

The chain drive extends between a pinion hinged to the motor by means of a second connection axis and a ring connected to the wheel axis, in which the chain drive defines an upper taught branch which connects the pinion and the ring.

The ring defines a connecting rod element which connects the wheel axis with the upper taught branch of the chain drive.

A center of instantaneous rotation (CIR) of the connecting rod element is defined by the intersection of a first geometrical line passing through the first connection axis and the wheel axis, and by a second geometrical line representing the extension of the upper taught branch of the chain drive.

The motorcycle according to the invention as defined in claim 1 comprises adjustment means adapted to adjust the position of at least one of said connection axes with respect to the other of said connection axes.

In particular, the adjustment means are adapted to adjust the related position of at least one of said connection axes with respect to the other, in feedback to a compression variation of the suspension, such that the related adjustment of position of the connection axes varies the position of the center of instantaneous rotation (CIR) so as to therefore vary the balance of said motorcycle.

Thereby, by adjusting the quadrilateral kinematic mechanism, the balance of the vehicle may be controlled by taking advantage of the compression of the rear suspension as input signal. In other words, the balance of the motorcycle may be controlled according to the movement of the suspension by adapting the center of instantaneous rotation each time.

For example, it could be desirable to minimize the variations of balance to promote traction.

When accelerating, two forces act on the vehicle, which tend to vary the balance:
- the force of inertia associated with the acceleration applied in the center of gravity: it causes a load transfer which unloads the forecarriage and loads the rear axle, therefore the rear suspension tends to be shortened due to the effect of the greater "weight" it suffers from;
- the force of traction which is applied to the contact point of the rear drive wheel: by breaking it up into two orthogonal components, the component which points toward the center of instantaneous rotation CIR is identified, which is the one which pushes the vehicle forward, and the orthogonal one is identified, which instead - according to where the center of instantaneous rotation is located - tends to rotate the oscillating part of the rear suspension, i.e. the connecting rod element, so as to extend or compress the damper.

If the two effects are of equal entity, the vehicle advances without pitching.

It however is to be understood that such an adjustment which allows reducing the variations of the suspension, is not the ideal one for the driver. The adjustment of the quadrilateral kinematic mechanism in general allows the balance of the motor vehicle to be controlled.

To affect such a balance of forces, given the acceleration value that the driver decides to have, the position of the center of gravity of the suspended weight (the driver may stand up more or less in the saddle) may be acted on, or the suspensions may be forced to vary their position (stationary with adjustments or driving in the case of electronic suspensions) or again, according to the present invention, the quadrilateral which identifies the center of instantaneous rotation of the rear wheel (connecting rod of the quadrilateral) may be acted on.

Such means advantageously allow the motorcyclist to vary the geometry of the suspension. Indeed, by varying the position of one or of both the connection axes indicated, the direction of the catenary tension angle, and accordingly the catenary tension ratio, may be varied. In essence, the adjustment means allow the catenary tension ratio to be adjusted according to transfer condition of the load to the rear wheel (known or anticipated condition which may be within given limits) so as to maintain a correct balance of the motorcycle.

According to a first possible embodiment, the first connection axis is fixed, and the adjustment means are configured to vary the position of the second connection axis with respect to the first connection axis. In this embodiment, the variation of the catenary tension angle is obtained by varying the position of the pinion, and therefore by acting on the direction of the taught branch of the chain.

In a second embodiment, alternative to the first one, the second connection axis is fixed and in which said adjustment means are configured to vary the position of the first connection axis with respect to said second connection axis. Here therefore, the catenary tension angle is varied by acting on the swingarm, and therefore by varying the orientation of the direction along which the swingarm itself extends.

Within the scope of the first embodiment indicated above, in a possible embodiment thereof, the adjustment means comprise:
- a mechanical joint, which includes a driving portion and a driven portion which can be misaligned with respect to the driving portion, in which said joint further comprises a connection portion to transfer the movement of the driving portion to the driven portion, in which the driving portion brought into rotation by the motor and the driven portion causes the rotation of the pinion about the second connection axis;
- an actuator operatively connected to the driven portion of the joint in order to cause a variation of the position of the driven portion and of the second connection axis with respect to the driving portion.

Preferably, the actuator is a hydraulic actuator or an electric actuator or a pneumatic actuator. Preferably, the joint is of the Oldham type. However, in certain possible variants, the joint could be an extensible double Cardan joint or two extensible tripod joints could be used or alternatively a Rzeppa-type extensible double homokinetic joint or the like could be used.

Within the scope of the second embodiment indicated above, the adjustment means comprise at least one guide element for moving the first connection axis along a predetermined path and at least one thrust element, which directly or indirectly exerts a force on the first connection axis so as to induce such a displacement.

In a first possible embodiment, the guide element is hinged to the frame and rotating about a rotation axis; the swingarm is hinged to the guide element by means of the first connection pin in an eccentric position with respect to the rotation axis. Also the thrust element is connected to the guide element in an eccentric position with respect to the rotation axis, but different from the position at which the swingarm is connected. Preferably, the thrust element is an electric actuator or a hydraulic actuator or a pneumatic actuator.

Alternatively, the thrust element is a spring comprising a first end hinged to the frame and a second end hinged to the guide element.

In another variant, the thrust element comprises a kinematic mechanism comprising:
- a rigid body hinged to the swingarm and to a first end of a damper, in which a second end of the damper is hinged to the frame;
- a crank hinged to the frame, where said crank is further hinged to the rigid body by means of a further connection axis;
- a rod comprising a first end connected to the guide element and a second end connected to a point of the crank or of the rigid body or connected to said further connection axis.

### LIST OF THE DRAWINGS

Further features and advantages of the invention shall be more apparent from an examination of the following detailed description of some preferred, but not exclusive, embodiments of the motorcycle, shown by way of non-limiting example, with the support of the accompanying drawings, in which:
- Figure 1 is a diagram related to the forces which act on a rear suspension of a motorcycle of known type;
- Figures 2 to 4 are diagrammatic views related to technical solutions of known type;
- Figure 5 is a diagrammatic view related to a first embodiment of a motorcycle according to the present invention.
- Figure 6 is a view of certain components of the motorcycle in Figure 5;
- Figures 7 to 9 are diagrammatic views related to the operation of components of the motorcycle in Figure 5;
- Figure 10 is a diagrammatic view related to a second embodiment of a motorcycle according to the present invention;
- Figures 11 to 13 are diagrammatic views related to the operation of components of the motorcycle in Figure 10;
- Figure 14 is a diagrammatic view related to a third embodiment of a motorcycle according to the present invention;
- Figure 15 is a diagrammatic view related to a further embodiment of a motorcycle according to the present invention;
- Figure 16 is a diagrammatic view related to a further embodiment again of a motorcycle according to the present invention.

### DETAILED DESCRIPTION

With reference to the mentioned drawings, the present invention relates to a motorcycle 1 comprising a frame 12, a front wheel 11 and a rear wheel 13 connected to frame 12 by means of at least one rigid connection element 14, hereinafter also indicated by the term swingarm 14. At least one damper 70 also is arranged between swingarm 14 and frame 12. Swingarm 14 is hinged to frame 12 by means of a first connection axis (or pin) 31 which allows the related rotation of swingarm 14 with respect to frame 12. For the purposes of the present invention, the direction which intersects the axes at which swingarm 14 is hinged to frame 12 and to the rear wheel 13, respectively, is indicated as extension direction of the swingarm (indicated by numeral 401).

Frame 12 supports a motor 100 which generates a motor torque. This is transmitted to the rear wheel 13 by means of a chain drive system which comprises a ring gear 41 which is integral with the rear wheel 13, a pinion 42 hinged to frame 12 by means of a second connection axis (pin) 32. The drive system further comprises a chain 45 for allowing the transfer of the motor torque from pinion 42 to ring 41.

Motorcycle 1 according to the invention is characterized in that it comprises the adjustment means 5, 5A for adjusting the position of at least one of the two connection axes (pins) 31, 32 defined above. In particular, the adjustment means 5, 5A are operatively associated with at least one of the two connection axes 31, 32 to vary the position with respect of the other connection axis. The term "*associated*" generally means that the adjustment means act, thus causing a displacement of said at least one of said connection axes 31, 32, regardless of the fact of being directly or indirectly connected to the same connection axis. As is better clarified during the course of the description below, a corresponding variation of the catenary tension angle σ defined above, and therefore of the catenary tension ratio, may be obtained by means of varying the position of one of the two connection axes 31, 32.

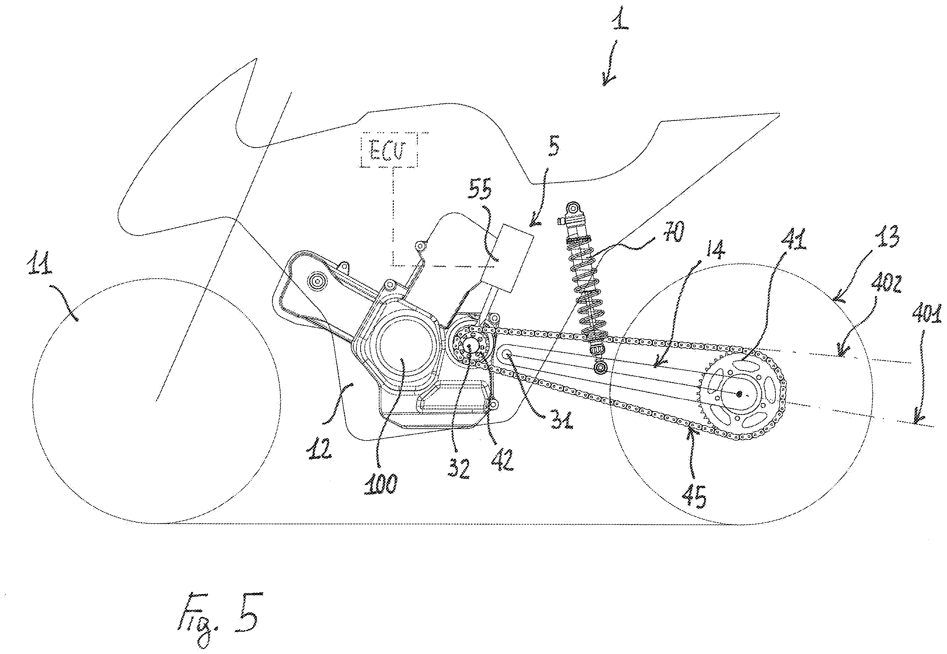

For the purposes of the present invention, the expression "*connection axis"* means generally indicating a body, in the form of pin or bearing, which defines a rotation axis of a component (pinion 42 or swingarm 14, for example) with respect to another component of the motorcycle (frame 12 to continue the example). According to a first embodiment schematized in Figure 5, the first connection axis 31 maintains a fixed position with respect to frame 12 and the adjustment means 5 are configured to vary the position of the second connection axis 32 with respect to the first connection axis 31.

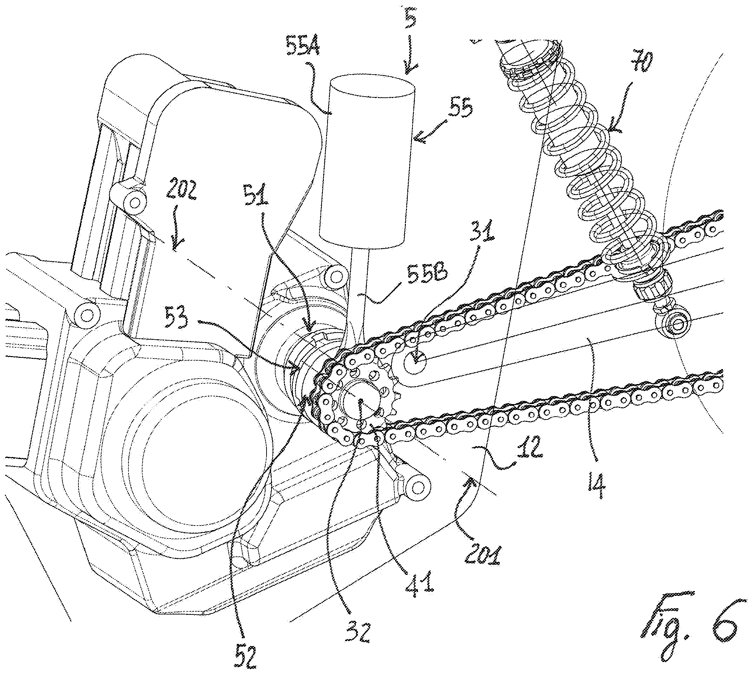

Within the scope of this first embodiment, in a possible embodiment thereof shown in Figure 6, the adjustment means 5 comprise a mechanical joint 50, which includes a driving portion 51 and a driven portion 52 which is misaligned with respect to said driving portion 51. The two portions 51, 52 are connected by means of a connection portion 53 so that the rotation movement is transferred from the driving portion 51 to the driven portion 52 also if the rotation axes 201, 202 of the two portions 51, 52 are misaligned from each other.

For the purposes of the present invention, the expression *"driving portion 51*" of joint 50 means a portion which rotates due to motor 100 (directly or by means of the interposition of a mechanical drive). The expression *"driven portion 52"* of joint 50 instead generally means a rotating portion operatively connected to pinion 42 so as to induce the rotation thereof about the first connection axis 31 and so that a translation of the second connection axis 32 corresponds to a translation of the driven portion 52.

Again with reference to Figure 6, in this embodiment the adjustment means 5 comprise an actuator 55 operatively connected to the driven portion 52 of joint 50 so as to vary the position thereof with respect to the driving portion 51. The latter instead maintains a fixed position with respect to frame 12. Specifically, actuator 55 is configured to cause a translation of the driven portion 52, and therefore to induce a corresponding variation of the position of the second connection axis 32. This translation translates into a variation of the direction of the taught branch and of the chain and ultimately, into a variation of the catenary tension ratio.

Actuator 55 may be of the electric type or alternatively, of the hydraulic type. In any case, actuator 55 comprises a fixed part 55A connected to frame 12 and a movable part 55B (rod) connected in rotatable manner to the driven portion 52 of joint 50. The connection with the driven portion 52 of joint 50 is such as to allow the related rotation between the movable part 55B and the driven portion 52 of joint 50, and therefore the transmission of the motor torque to pinion 42.

Actuator 55 is operatively connected to a control unit ECU (indicated by the dotted line in Figure 5) which allows the actuation thereof. In particular, the control of actuator 55 may be directly actuated by the motorcyclist or in a completely automatic manner by the ECU according to the conditions of the motorcycle. More specifically, the motorcyclist may decide to set the position of pinion 41 (that is, of the second connection axis 32) according to a given stretch of road to be travelled. According to a possible embodiment, the control unit ECU may be set so as to actuate a continuous adjustment of the catenary tension angle σ, for example according to the signals sent to the same by suitable sensors (e.g. gyroscopes) capable of detecting, in addition to the acceleration, also the tilting angle of the vehicle. In other words, by processing the signal of such sensors, the ECU may calculate the load transfer direction (that is, make a forecast of angle τ) and control or not control actuator 55 to displace the pinion so as to maintain the desired value of the catenary tension ratio.

In one setting modality, the control unit ECU could forecast a variation of the load transfer direction along the road to be travelled according to the features thereof (corners, straight stretches, uphill or downhill stretches). The road could be set in this modality by the motorcyclist by means of a navigation system.

In the embodiment schematized in Figure 6, joint 50 is of the Oldham type. However, joint 50 could have a different shape so long as it is functionally equivalent. In this regard, the joint could be an extensible double Cardan joint or two extensible tripod joints could be used or alternatively a Rzeppa-type extensible double homokinetic joint or the like could be used.

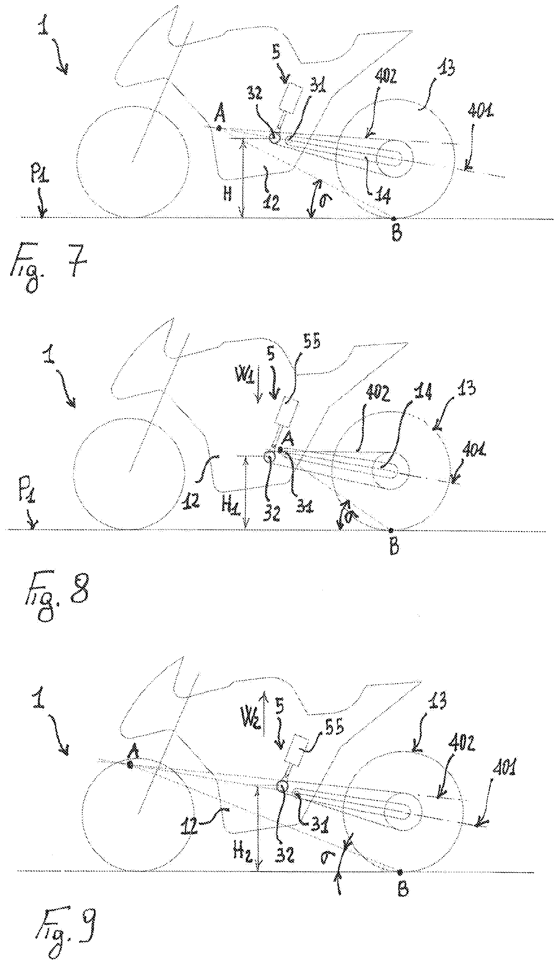

Figures 7 to 9 allow comprehending the operating principle of the adjustment means in the above-described embodiment commented on for Figure 5. Figure 7 shows the adjustment means in an initial reference position, whereby the first reference direction 401 along which swingarm 14 extends and the second reference direction 402 identified by the taught branch of chain 45, may be identified. The two directions 401, 402 cross each other in point A. B indicates the contact point of the rear wheel 13 with the ground (plane P1). Points A and B identify the direction of the catenary tension, and therefore the related angle σ already defined above. In particular, the point of intersection A defines the center of instantaneous rotation (CIR) of the connecting rod element, i.e. the arm defined by ring 41 of the rear wheel 13. H indicates the height of the second connection axis 32 (i.e. of pinion 42) with respect to the support plane P1 of the motorcycle.

With reference to Figure 8, an actuation of actuator 55 in the direction of an extension of the rod (see arrow W1) causes a decrease in the height (H1 <H) of the pinion with respect to the support plane P1. This translates into a displacement of the second reference direction 402 with a subsequent increase of the value of angle σ.

With reference to Figure 9, in the case instead of an actuation of the actuator in the direction of a return of the rod (see arrow W2), the second connection axis 32 (and pinion 42) move away from the support plane P1 (H2>H). This results in the subsequent decrease of the value of angle σ.

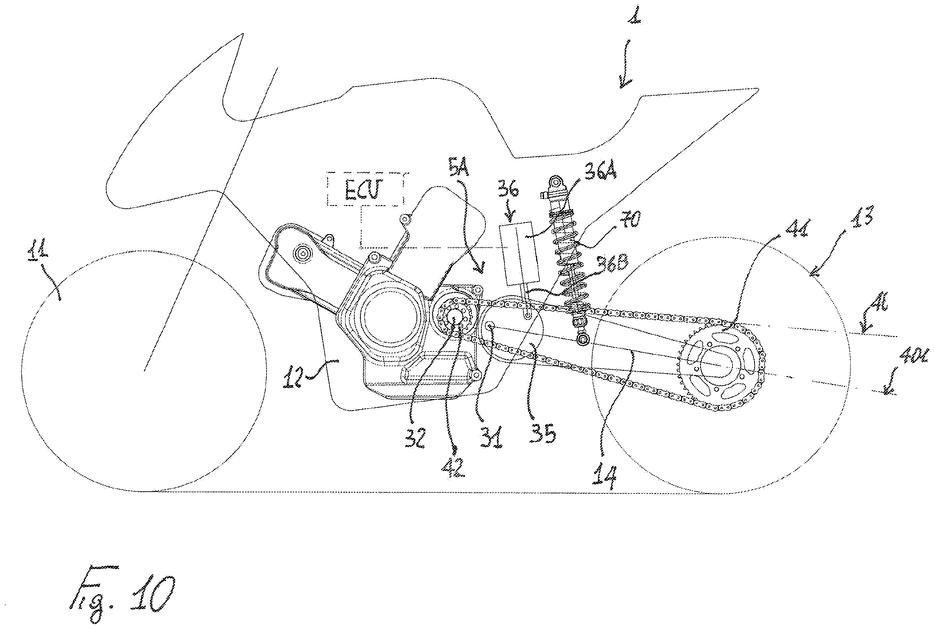

According to a second embodiment of the invention schematized in Figure 10, the second connection axis 32 maintains a fixed position with respect to frame 12 and the adjustment means 5A are configured to vary the position of the first connection axis 31 with respect to the second connection axis 32. In other words, the adjustment means 5A in this embodiment vary the direction of the first reference direction 401 along which swingarm 14 extends. Here, the adjustment does not therefore act on the second direction 402 along which the taught branch of chain 45 extends.

Within the scope of this second embodiment, the adjustment means 5A comprise a guide element 35 for guiding the first connection axis 31 along a predetermined path and at least one thrust element 36, 360, which directly or indirectly acts on the first connection axis 31 so as to induce the guided displacement thereof along the guide element 35. The term *"indirectly"* means a condition for which the thrust element 36 in any case causes the displacement of the first connection axis 31 also if it is not connected thereto (examples are shown in Figures 10, 14 and 15). Within the scope of this second embodiment, in a possible embodiment thereof, the adjustment means 5A could comprise, as guide element 35, a body hinged to frame 12 so as to rotate about a rotation axis 33 thereof. Swingarm 14 is hinged to the guide element 35 by means of the first connection axis 31 in an eccentric position with respect to the rotation axis 33. Also the thrust element 36 is connected to the guide element 35 in eccentric position with respect to the rotation axis 33. This latter position being different from that in which the first connection axis 31 is positioned.

Upon the actuation thereof, the thrust element 36 causes a rotation of the guide element 35 and a subsequent displacement of the first connection axis 31 along a circular trajectory which is concentric to the rotation axis 33 of the guide element 35. The direction of such a displacement (clockwise or anticlockwise) depends on the direction of the force exerted by the thrust element 36. Such a displacement therefore modifies the position of point A, i.e. of the center of instantaneous rotation. According to the principle disclosed above, the displacement of the first connection axis 31 translates into a variation of the first reference direction 401 of extension of swingarm 14 with respect to frame 12 and accordingly, a variation of the catenary tension angle σ.

In the embodiment schematized in Figure 10, the thrust element 36 consists of an actuator which comprises a fixed part 36A connected in rotatable manner to frame 12 and a movable part 36B connected to the adjustment element 35 in eccentric position with respect to the rotation axis 33. The actuator may be of electric type or of hydraulic type and may be directly actuated by the motorcyclist by means of the control unit ECU to which the actuator is connected. In general, the actuator used as the thrust element 36 may be actuated by the motorcyclist or in a continuous manner by the control unit ECU similarly to the above provision for the actuator 55 in reference to the first embodiment of the invention described above.

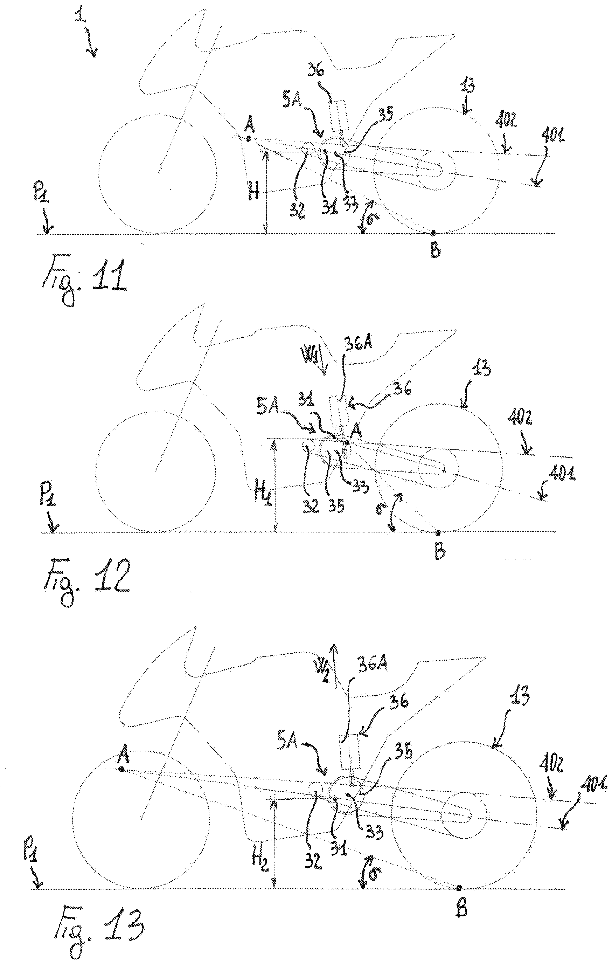

Figures 11 to 13 allow the operation of the adjustment means in the above-described embodiment to be comprehended. Figure 11 shows motorcycle 1 in an initial reference condition. Thus, the above-defined catenary tension angle σ is indicated in this drawing. With reference to Figure 12, an actuation of the actuator in the direction of an extension of the rod, i.e. away from the fixed part 36A of the actuator (see arrow W1), causes a rotation of the adjustment element 35 in clockwise direction and a subsequent displacement of the first connection axis 31 away from the support plane P1 (condition H1>H). As is apparent, this condition translates into a reduction of angle σ.

With reference to Figure 13, an actuation of the actuator in the opposite direction, i.e. in the direction of a return of the rod into the fixed part 36A (see arrow W2), causes a rotation of the adjustment element 35 in anticlockwise direction and a subsequent displacement of the first connection axis 31 towards the ground (condition H2<H). Here, the catenary tension angle σ decreases with respect to the initial condition in Figure 11.

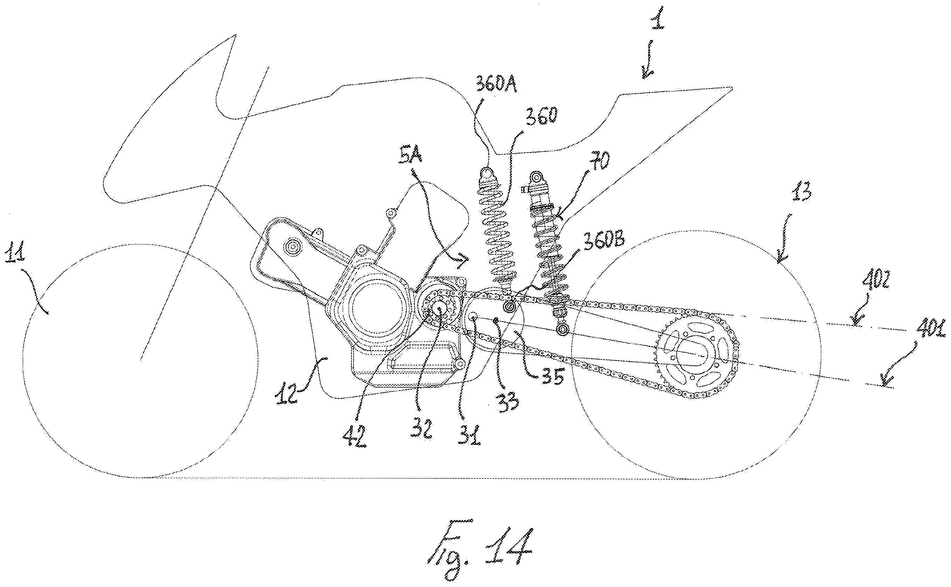

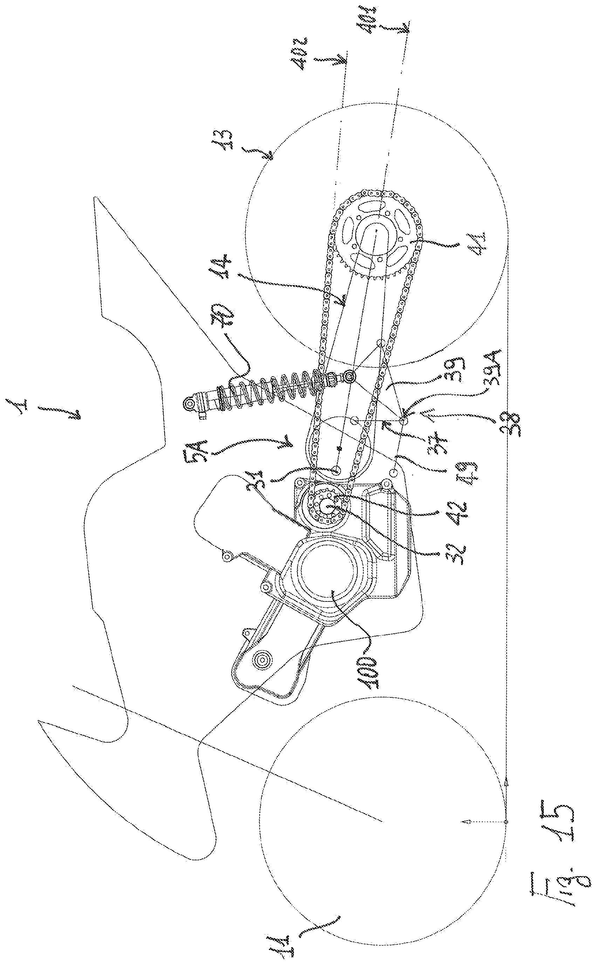

In a possible embodiment (schematized in Figure 14), the thrust element (indicated by 360) consists of a spring provided with a first end 36A hinged to frame 12 and with a second end 36B hinged on the guide element 35 defined above. Thus, the variant in Figure 14 differs from the solution in Figure 10 due to a different configuration of the thrust element 36. In this embodiment in particular, spring 360 operates to counter the spring of damper 70 and causes a displacement of the first connection axis 31 according to the behavior of damper 70. Overall, spring 360 causes a lowering or raising of the position of the first connection pin 31 so as to maintain the neutrality of the assembly without any aid from electronic controls, which instead are required when the actuator is used. Figure 15 relates to a further embodiment of the motorcycle, and in particular of the adjustment means 5A. In particular, with respect to the embodiments shown in Figures 10 and 14, a kinematic mechanism (indicated by numeral 38) is used as thrust element, the kinematic mechanism being operatively connected to the guide element 35 (always in the form of rotating element rotating about the rotation axis 33 thereof) and to damper 70 so that the rotation of the guide element 35 (and therefore the displacement of the first connection pin 31 along the circular trajectory) is caused by the force acting on damper 70. In this embodiment, damper 70 is not directly hinged to swingarm 14, rather to a rigid body 39 of the kinematic mechanism 38. Such a rigid body 39 is identified in Figure 15 by the three rods connected as a triangle. The rigid body 39 is hinged to swingarm 14. Moreover, the rigid body 39 is hinged to a crank 49 by means of a further connection axis 39A. In addition to the rigid body 39 and crank 49, the kinematic mechanism 38 also comprises a further rod 37 which connects said further connection axis 39A to the guide element 35, as shown in Figure 15. However, in possible functionally equivalent variants, rod 37 could also be connected to a point of crank 49 or of the rigid body 39, the connection with the guide element 35 being understood. In any case, a movement of the rigid body 39 caused by the action of damper 70 translates into a rotation of the guide element 35, and therefore into a displacement of the first connection pin 31, i.e. into a variation of the value of the catenary tension angle σ.

The possibility of configuring the adjustment means in a different manner with particular reference to the shape of the guide element falls within the scope of the present invention. In this regard, in a possible embodiment not shown in the drawings, the guide element could be defined by a rectilinear or curvilinear guide defined in the structure of the frame. The thrust element could consist of one of those described above, i.e. could be an actuator, a spring or a kinematic mechanism connected to the damper.

The possibility of providing first adjustment means for varying the position of the first connection axis and second adjustment means for varying the position of the second connection axis also falls within the scope of the present invention. In this sense, the possibility of varying the catenary tension angle by acting on the position of both the connection axes indicated above thus falls within the present invention. In this sense, the technical solution shown in Figure 5 for example, and simultaneously one of those shown in Figures 10, 14 and 15, or another which is functionally equivalent, could be implemented on the same motorcycle.

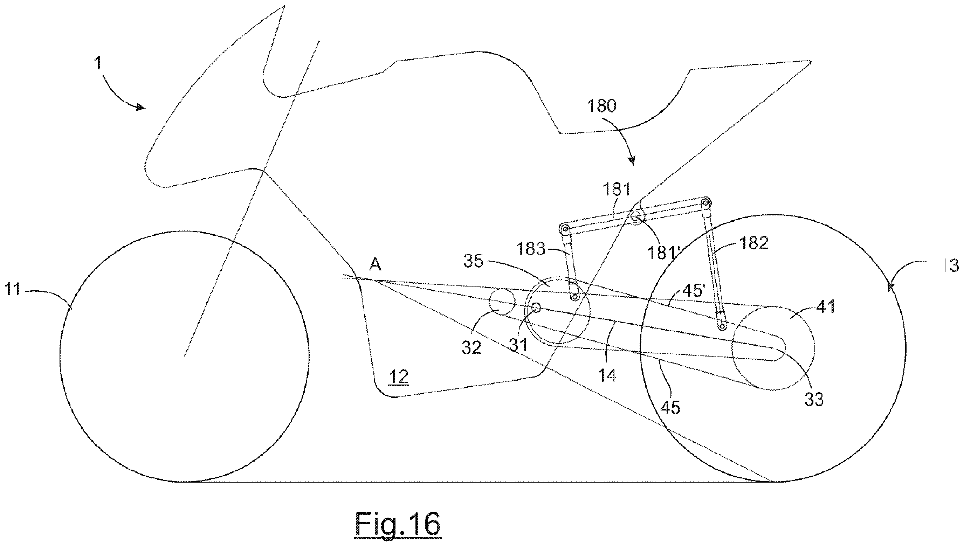

Figure 16 shows a construction variant of the adjustment means 180, which comprise a mechanical adjustment unit 180 connected to the suspension so that upon a stress due to the variation of the compression of the suspension, the mechanical adjustment unit 180 accordingly varies the related position of at least one of the connection axes to modify the center of instantaneous rotation (CIR).

In particular, the mechanical adjustment unit 180 is a linkage consisting of a first rod 181 pivotally connected to a portion of the frame about a rotation axis 181', a second rod 182 pivotally connected to the first rod 181 at a first end and to a portion of swingarm 14, and a third rod 183 pivotally connected to the first rod 181 at a second end, opposite to the first end, and to a guide element 35 which comprises axis 31. Thereby, when the suspension is compressed, the rear wheel 13 moves upward. The linkage 181, 182 and 183 transmits this jolting movement to the guide element 35 which therefore moves axis 31, thus modifying the center of instantaneous rotation defined as described above.

## Claims

1. A motorcycle (1) comprising:
a frame (12) supporting a motor (100);
a rear wheel (13) operatively connected to said frame (12) by means of a suspension configuring, with said frame (12), a quadrilateral kinematic mechanism, wherein said quadrilateral kinematic mechanism comprises:
a swingarm (14) which extends between a first connection axis (31), at said frame (12) and/or said motor (100), and a wheel axis (33) at said rear wheel (13);
a chain drive (45) to transfer a motor torque generated by said motor (100) to said rear wheel (13), said chain drive (45) extends between a pinion (42) hinged to said motor (100) by means of a second connection axis (32) and a ring (41) connected to said wheel axis (33), wherein said chain drive (45) defines an upper taught branch (45') which connects said pinion (42) and said ring (41),
wherein said ring (41) defines a connecting rod element which connects said wheel axis (33) to said upper taught branch (45') of the chain drive,
wherein the center of instantaneous rotation (CIR) of said connecting rod
element is defined by the intersection of a first geometrical line passing through said first connection axis (31) and said wheel axis (33), and by a second geometrical line representing the extension of said upper taught branch (45') of said chain drive;
adjustment means (5, 5A, 180) adapted to adjust the related position of at least one of said connection axes (31, 32) with respect to the other of said connection axes (31, 32), in feedback to a compression variation of said suspension, such that said adjustment of related position of said connection axes (31, 32) varies the position of said center of instantaneous rotation (CIR) so as to therefore vary
the balance of said motorcycle (1), **characterized in that** said adjustment means comprise an actuator (55) connected to a control unit of said motorcycle, said control unit being configured to receive an input signal of the variation of the compression of said suspension, said actuator (55) being configured to adjust the related position of at least one of said connection axes to modify said center of instantaneous rotation (CIR).

2. A motorcycle (1) according to claim 1, wherein said first connection axis (31) is fixed and wherein said adjustment means (5) are configured to vary the position of said second connection axis (32) with respect to said first connection axis (31).

3. A motorcycle (1) according to claim 1, wherein said second connection axis (32) is fixed and wherein said adjustment means (5A) are configured to vary the position of said first connection axis (31) with respect to said second connection axis (32).

4. A motorcycle (1) according to claim 1, **characterized in that** it comprises first adjustment means (5A) configured to vary the position of said first connection axis (31) and second adjustment means (5) to vary the position of said second connection axis (32).

5. A motorcycle (1) according to any one of the preceding claims, wherein said adjustment means (5) comprise:
- a mechanical joint (50), which includes a driving portion (51) and a driven portion (52) which can be misaligned with respect to said driving portion (51), said joint (50) comprising a connection portion (53) to transfer the movement of said driving portion (51) to said driven portion, wherein said driving portion (51) is rotated by said motor (100) and said driven portion (52) rotates said pinion (42) about said second connection axis (32);
- an actuator (55) operatively connected to said driven portion (52) of said joint (50) in order to determine a variation in the position of said driven portion (52) and of said second connection axis (32) with respect to said driving portion (51).

6. A motorcycle (1) according to claim 5, wherein said actuator (50) is selected from: a hydraulic actuator, an electric actuator, a pneumatic actuator.

7. A motorcycle (1) according to claim 5 or 6, wherein said joint is selected from a group consisting of an Oldham-type joint, a double Cardan joint and a double homokinetic joint.

8. A motorcycle (1) according to claim 1 or 3, wherein said adjustment means (5A) comprise at least one guide element (35) for guiding said first connection axis (31) along a predetermined path and at least one thrust element (36), which directly or indirectly exerts a force on said first connection axis (31) so as to cause the displacement along said predetermined path.

9. A motorcycle (1) according to claim 8, wherein said guide element (35) is a rotating element hinged to said frame (12) to rotate about a rotation axis (33), said swingarm (14) being hinged to said guide element (35) by means of said first connection pin (31) in an eccentric position with respect to said rotation axis (33), said thrust element (36) being connected to said guide element (35) in an eccentric position with respect to said rotation axis (33) which is different from the position in which said swingarm (14) is connected.

10. A motorcycle (1) according to claim 8 or 9, wherein said thrust element (36) is selected from: an electric actuator, a hydraulic actuator, or a pneumatic actuator.

11. A motorcycle (1) according to claim 9, wherein said thrust element (36) is a spring comprising a first end (36A) hinged to the frame (12) and a second end (36B) hinged to said guide element (35).

12. A motorcycle (1) according to claim 9, wherein said thrust element (36) comprises a kinematic mechanism (38), which includes:
- a rigid body (39) hinged to said swingarm (14) and hinged to a first end of a damper (70), wherein a second end of said damper (70) is hinged to said frame (12);
- a crank (49) hinged to said frame (12), said crank (49) being further hinged to said rigid body (39) by means of a further connection axis (39A);
- a rod (37) comprising a first end connected to said guide element (35) and a second end connected to a point of said crank (49) or of said rigid body (39) or to said further connection axis (39A).

## Patentansprüche

1. Motorrad (1), umfassend:
einen Rahmen (12), der einen Motor (100) trägt;
ein Hinterrad (13), das mit dem Rahmen (12) mittels einer Aufhängung betriebswirksam verbunden ist, die mit dem Rahmen (12) einen vierarmigen kinematischen Mechanismus konfiguriert, wobei der vierarmige kinematische Mechanismus Folgendes umfasst:
eine Schwinge (14), die sich zwischen einer ersten Verbindungsachse (31) an dem Rahmen (12) und/oder dem Motor (100) und einer Radachse (33) an dem Hinterrad (13) erstreckt;
einen Kettentrieb (45), um ein von dem Motor (100) erzeugtes Motordrehmoment auf das Hinterrad (13) zu übertragen, wobei sich der Kettentrieb (45) zwischen einem Ritzel (42), das mittels einer zweiten Verbindungsachse (32) an dem Motor (100) angelenkt ist, und einem mit der Radachse (33) verbundenen Ring (41) erstreckt, wobei der Kettentrieb (45) einen oberen kettenseitigen Zweig (45') definiert, der das Ritzel (42) und den Ring (41) verbindet,
wobei der Ring (41) ein Verbindungsstangenelement definiert, das die Radachse (33) mit dem oberen kettenseitigen Zweig (45') des Kettentriebs verbindet,
wobei der Mittelpunkt der Momentandrehung (CIR) des Verbindungsstangenelements durch den Schnittpunkt einer ersten geometrischen Linie, die durch die erste Verbindungsachse (31) und die Radachse (33) verläuft, und durch eine zweite geometrische Linie, die die Verlängerung des oberen kettenseitigen Zweigs (45') des Kettentriebs darstellt, definiert ist;
Einstellmittel (5, 5A, 180), die angepasst sind, um die zugehörige Position von mindestens einer der Verbindungsachsen (31, 32) in Bezug auf die andere der Verbindungsachsen (31, 32) in Rückkopplung auf eine Kompressionsvariation der Aufhängung einzustellen, so dass die Einstellung der zugehörigen Position der Verbindungsachsen (31, 32) die Position des Mittelpunkts der Momentandrehung (CIR) variiert, um so dadurch die Balance des Motorrads (1) zu variieren, **dadurch gekennzeichnet, dass** die Einstellmittel einen Stellantrieb (55) umfassen, der mit einer Steuereinheit des Motorrads verbunden ist, wobei die Steuereinheit konfiguriert ist, um ein Eingangssignal der Variation der Kompression der Aufhängung zu empfangen, wobei der Stellantrieb (55) konfiguriert ist, um die zugehörige Position von mindestens einer der Verbindungsachsen einzustellen, um den Mittelpunkt der Momentandrehung (CIR) zu ändern.

2. Motorrad (1) nach Anspruch 1, wobei die erste Verbindungsachse (31) feststehend ist und wobei die Einstellmittel (5) konfiguriert sind, um die Position der zweiten Verbindungsachse (32) in Bezug auf die erste Verbindungsachse (31) zu variieren.

3. Motorrad (1) nach Anspruch 1, wobei die zweite Verbindungsachse (32) feststehend ist und wobei die Einstellmittel (5A) konfiguriert sind, um die Position der ersten Verbindungsachse (31) in Bezug auf die zweite Verbindungsachse (32) zu variieren.

4. Motorrad (1) nach Anspruch 1, **dadurch gekennzeichnet, dass** es erste Einstellmittel (5A), die konfiguriert sind, um die Position der ersten Verbindungsachse (31) zu variieren, und zweite Einstellmittel (5), um die Position der zweiten Verbindungsachse (32) zu variieren, umfasst.

5. Motorrad (1) nach einem der vorhergehenden Ansprüche, wobei die Einstellmittel (5) umfassen:
- ein mechanisches Gelenk (50), das einen Antriebsabschnitt (51) und einen angetriebenen Abschnitt (52) einschließt, der in Bezug auf den Antriebsabschnitt (51) falsch ausgerichtet werden kann, wobei das Gelenk (50) einen Verbindungsabschnitt (53) umfasst, um die Bewegung des Antriebsabschnitts (51) auf den angetriebenen Abschnitt zu übertragen, wobei der Antriebsabschnitt (51) durch den Motor (100) gedreht wird und der angetriebene Abschnitt (52) das Ritzel (42) um die zweite Verbindungsachse (32) dreht;
- einen Stellantrieb (55), der mit dem angetriebenen Abschnitt (52) des Gelenks (50) betriebswirksam verbunden ist, um eine Variation der Position des angetriebenen Abschnitts (52) und der zweiten Verbindungsachse (32) in Bezug auf den Antriebsabschnitt (51) zu bestimmen.

6. Motorrad (1) nach Anspruch 5, wobei der Stellantrieb (50) ausgewählt ist aus: einem hydraulischen Stellantrieb, einem elektrischen Stellantrieb, einem pneumatischen Stellantrieb.

7. Motorrad (1) nach Anspruch 5 oder 6, wobei das Gelenk aus einer Gruppe ausgewählt ist, die aus einem Gelenk vom Oldham-Typ, einem Doppelkardangelenk und einem homokinetischen Doppelgelenk besteht.

8. Motorrad (1) nach Anspruch 1 oder 3, wobei die Einstellmittel (5A) mindestens ein Führungselement (35) zum Führen der ersten Verbindungsachse (31) entlang eines vorbestimmten Weges und mindestens ein Schubelement (36) umfassen, das direkt oder indirekt eine Kraft auf die erste Verbindungsachse (31) ausübt, um die Verschiebung entlang des vorbestimmten Weges zu bewirken.

9. Motorrad (1) nach Anspruch 8, wobei das Führungselement (35) ein Drehelement ist, das an dem Rahmen (12) angelenkt ist, um sich um eine Drehachse (33) zu drehen, wobei die Schwinge (14) an dem Führungselement (35) mittels des ersten Verbindungsbolzens (31) in einer exzentrischen Position in Bezug auf die Drehachse (33) angelenkt ist, wobei das Schubelement (36) mit dem Führungselement (35) in einer exzentrischen Position in Bezug auf die Drehachse (33) verbunden ist, die sich von der Position unterscheidet, in der die Schwinge (14) verbunden ist.

10. Motorrad (1) nach Anspruch 8 oder 9, wobei das Schubelement (36) ausgewählt ist aus: einem elektrischen Stellantrieb, einem hydraulischen Stellantrieb oder einem pneumatischen Stellantrieb.

11. Motorrad (1) nach Anspruch 9, wobei das Schubelement (36) eine Feder ist, die ein erstes Ende (36A), das an dem Rahmen (12) angelenkt ist, und ein zweites Ende (36B), das an dem Führungselement (35) angelenkt ist, umfasst.

12. Motorrad (1) nach Anspruch 9, wobei das Schubelement (36) einen kinematischen Mechanismus (38) umfasst, der Folgendes einschließt:
- einen starren Körper (39), der an der Schwinge (14) angelenkt ist und an einem ersten Ende eines Dämpfers (70) angelenkt ist, wobei ein zweites Ende des Dämpfers (70) an dem Rahmen (12) angelenkt ist;
- eine Kurbel (49), die an dem Rahmen (12) angelenkt ist, wobei die Kurbel (49) ferner mittels einer weiteren Verbindungsachse (39A) an dem starren Körper (39) angelenkt ist;
- eine Stange (37), umfassend ein erstes Ende, das mit dem Führungselement (35) verbunden ist, und ein zweites Ende, das mit einem Punkt der Kurbel (49) oder des starren Körpers (39) oder mit der weiteren Verbindungsachse (39A) verbunden ist.

## Revendications

1. Moto (1) comprenant :
un cadre (12) supportant un moteur (100) ;
une roue arrière (13) reliée de manière opérationnelle audit cadre (12) au moyen d'une suspension configurant, avec ledit cadre (12), un mécanisme cinématique quadrilatéral, dans laquelle ledit mécanisme cinématique quadrilatéral comprend :
un bras oscillant (14) qui s'étend entre un premier axe de liaison (31), au niveau dudit cadre (12) et/ou dudit moteur (100), et un axe de roue (33) au niveau de ladite roue arrière (13) ;
une transmission par chaîne (45) pour transférer un couple moteur généré par ledit moteur (100) à ladite roue arrière (13), ladite transmission par chaîne (45) s'étend entre un pignon (42) articulé audit moteur (100) au moyen d'un second axe de liaison (32) et un anneau (41) relié audit axe de roue (33), dans laquelle ladite transmission par chaîne (45) définit une branche enseignée supérieure (45') qui relie ledit pignon (42) et ledit anneau (41),
dans laquelle ledit anneau (41) définit un élément de bielle qui relie ledit axe de roue (33) à ladite branche enseignée supérieure (45') de la transmission par chaîne,
dans laquelle le centre de rotation instantanée (CIR) dudit élément de bielle est défini par l'intersection d'une première ligne géométrique passant par ledit premier axe de liaison (31) et ledit axe de roue (33), et par une seconde ligne géométrique représentant l'extension de ladite branche enseignée supérieure (45') de ladite transmission par chaîne ;
des moyens de réglage (5, 5A, 180) adaptés pour régler la position relative d'au moins un desdits axes de liaison (31, 32) par rapport à l'autre desdits axes de liaison (31, 32), en réaction à une variation de compression de ladite suspension, de telle sorte que ledit réglage de la position relative desdits axes de liaison (31, 32) fasse varier la position dudit centre de rotation instantané (CIR) pour ainsi faire varier l'équilibre de ladite moto (1), **caractérisée en ce que** lesdits moyens de réglage comprennent un actionneur (55) relié à une unité de commande de ladite moto, ladite unité de commande étant configurée pour recevoir un signal d'entrée de la variation de la compression de ladite suspension, ledit actionneur (55) étant configuré pour régler la position relative d'au moins un desdits axes de liaison pour modifier ledit centre de rotation instantané (CIR).

2. Moto (1) selon la revendication 1, dans laquelle ledit premier axe de liaison (31) est fixe et dans laquelle lesdits moyens de réglage (5) sont configurés pour faire varier la position dudit second axe de liaison (32) par rapport audit premier axe de liaison (31).

3. Moto (1) selon la revendication 1, dans laquelle ledit second axe de liaison (32) est fixe et dans laquelle lesdits moyens de réglage (5A) sont configurés pour faire varier la position dudit premier axe de liaison (31) par rapport audit second axe de liaison (32).

4. Moto (1) selon la revendication 1, **caractérisée en ce qu'**elle comprend des premiers moyens de réglage (5A) configurés pour faire varier la position dudit premier axe de liaison (31) et des seconds moyens de réglage (5) pour faire varier la position dudit second axe de liaison (32).

5. Moto (1) selon l'une quelconque des revendications précédentes, dans laquelle lesdits moyens de réglage (5) comprennent :
- un joint mécanique (50), qui comprend une partie d'entraînement (51) et une partie entraînée (52) qui peut être désalignée par rapport à ladite partie d'entraînement (51), ledit joint (50) comprenant une partie de liaison (53) pour transférer le mouvement de ladite partie d'entraînement (51) à ladite partie entraînée, dans laquelle ladite partie d'entraînement (51) est entraînée en rotation par ledit moteur (100) et ladite partie entraînée (52) entraîne en rotation ledit pignon (42) autour dudit second axe de liaison (32) ;
- un actionneur (55) relié de manière opérationnelle à ladite partie entraînée (52) dudit joint (50) afin de déterminer une variation de la position de ladite partie entraînée (52) et dudit second axe de liaison (32) par rapport à ladite partie entraînée (51).

6. Moto (1) selon la revendication 5, dans laquelle ledit actionneur (50) est choisi parmi : un actionneur hydraulique, un actionneur électrique, un actionneur pneumatique.

7. Moto (1) selon la revendication 5 ou 6, dans laquelle ledit joint est choisi dans un groupe constitué d'un joint de type Oldham, d'un double joint de Cardan et d'un double joint homocinétique.

8. Moto (1) selon la revendication 1 ou 3, dans laquelle lesdits moyens de réglage (5A) comprennent au moins un élément de guidage (35) pour guider ledit premier axe de liaison (31) le long d'une trajectoire prédéterminée et au moins un élément de poussée (36), qui exerce directement ou indirectement une force sur ledit premier axe de liaison (31) de manière à provoquer le déplacement le long de ladite trajectoire prédéterminée.

9. Moto (1) selon la revendication 8, dans laquelle ledit élément de guidage (35) est un élément rotatif articulé sur ledit cadre (12) pour tourner autour d'un axe de rotation (33), ledit bras oscillant (14) étant articulé sur ledit élément de guidage (35) au moyen de ladite première broche de liaison (31) dans une position excentrée par rapport audit axe de rotation (33), ledit élément de poussée (36) étant relié audit élément de guidage (35) dans une position excentrée par rapport audit axe de rotation (33) qui est différente de la position dans laquelle ledit bras oscillant (14) est relié.

10. Moto (1) selon la revendication 8 ou 9, dans laquelle ledit élément de poussée (36) est choisi parmi : un actionneur électrique, un actionneur hydraulique ou un actionneur pneumatique.

11. Moto (1) selon la revendication 9, dans laquelle ledit élément de poussée (36) est un ressort comprenant une première extrémité (36A) articulée au cadre (12) et une seconde extrémité (36B) articulée audit élément de guidage (35).

12. Moto (1) selon la revendication 9, dans laquelle ledit élément de poussée (36) comprend un mécanisme cinématique (38), qui comprend :
- un corps rigide (39) articulé sur ledit bras oscillant (14) et articulé sur une première extrémité d'un amortisseur (70), dans laquelle une seconde extrémité dudit amortisseur (70) est articulée sur ledit cadre (12) ;
- une manivelle (49) articulée sur ledit cadre (12), ladite manivelle (49) étant en outre articulée sur ledit corps rigide (39) au moyen d'un autre axe de liaison (39A) ;
- une tige (37) comprenant une première extrémité reliée audit élément de guidage (35) et une seconde extrémité reliée à un point de ladite manivelle (49) ou dudit corps rigide (39) ou audit autre axe de liaison (39A).
